# EUROPEAN PATENT SPECIFICATION

(11) **EP 3 547 733 B1**
(45) Date of publication and mention of the grant of the patent: **27.03.2024**
(21) Application number: 18194648.4
(22) Date of filing: 14.09.2018
(51) Int. Cl.: H04L 9/40, H04L 9/08, H04L 67/146, H04L 67/1097, H04W 12/02, G06F 21/60, G06F 21/62, G06F 16/14

(54) **SYSTEM AND METHOD FOR ANONYMOUS DATA EXCHANGE BETWEEN SERVER AND CLIENT**
SYSTEM UND VERFAHREN ZUM ANONYMEN DATENAUSTAUSCH ZWISCHEN SERVER UND CLIENT
SYSTEME ET PROCEDE D'ECHANGE DE DONNEES ANONYMES ENTRE SERVEUR ET CLIENT

(30) Priority: 30.03.2018 RU 2018111486; 13.08.2018 US 201816101556
(43) Date of publication of application: 02.10.2019
(73) Proprietor: AO Kaspersky Lab, Moscow 125212 (RU)
(72) Inventor: EFREMOV, Andrey A., Moscow 125212 (RU); SHMOYLOV, Dmitry V., Moscow 125212 (RU)
(74) Representative: Chimini, Francesco

(56) References cited:
- EP-A1- 3 293 933
- US-A1- 2014 101 774
- US-A1- 2016 134 595
- US-B1- 8 600 050

## Description

### FIELD OF TECHNOLOGY

The present disclosure relates generally to the field of information security technology, more specifically, to systems and methods of assuring anonymity for data routing in a client-server architecture.

### BACKGROUND

Changes in legislation around the world are forcing information security specialists to seek out new methods for managing data coming from personal electronic devices. For example, in the Russia Federation a law was signed whereby the personally identifiable information of Russians used by Internet services must be kept on the territory of Russia; in Switzerland, banks are also required not to allow user data to leave the juridical territory of the federal government; and in a number of countries, personally identifiable information is prohibited from being kept in open form. The solutions being developed should not make the work of the users of computer systems more difficult and be as transparent as possible to the users in their operation.

With the advent of the General Data Protection Regulation (GDPR), the quantity of personally identifiable information being kept in a network infrastructure on the part of various services and being received from users is trending toward a minimum. It is necessary to provide distributed storage and processing of data obtained from users without losing its uniqueness.

These factors are causing difficulties in the implementation of a cloud infrastructure in the corporate and private sector, so that technical solutions are appearing on the market which can take into account the requirements of the legislation.

Existing approaches have the drawback of requiring the installation of an additional agent on a user's device, which makes it more difficult for the user to work with a remote server and makes the interaction nontransparent. In another case, where no agent is installed, a total encryption of the original data is performed regardless of the content, which also is inconvenient and creates an additional burden. Nor is proper consideration given to the location of the client and the server. A solution is needed which is able to solve these drawbacks.

US 2016/134595 and US 2014/101774 are relevant prior art documents.

### SUMMARY

Aspects of the present disclosure are configured to route data in a client-server architecture with anonymity being assured for the data being transmitted and without loss of the completeness and representativeness of the information, as required by the server for analysis and compilation of statistics (i.e., in compliance with data protection regulations). The technical result of the present disclosure is to provide anonymization of a client's data when transmitting data in a client-server architecture.

In one example, a method is provided for exchanging data in a client-server architecture. The method includes dividing, by a client, a first data structure intended for dispatch to a server into at least two substructures including a first substructure and a second substructure, and dispatching the first substructure from the client to the server across a first network node with an anonymization module. Data of the first substructure is transformed by the anonymization module. The first network node is situated in a first regional network different from a second network in which the server is located and not being in a same intranet as the server and the client. The method further includes dispatching the second substructure from the client to a second network node with a storage module The second network node is situated in a third regional network different from the second network in which the server is located and not being in a same intranet as the server and the client. The second substructure is received by the server from the network node with the storage module, the obtained data substructures are combined into a second data structure by the server.

In another example, the first transformation of the data substructures is done by the client using a one-way function such that an inverse transformation of the data cannot be performed by the anonymization module.

In another example, the second transformation of the data structure in transit is done by the anonymization module using a one-way function such that an inverse transformation cannot be performed by the server and by the client.

In another example, the transformation is performed by an encryption module.

In another example, the data of the second substructure not containing critical data is transformed using asymmetrical encryption, where a public key is sent to the client and a private key is kept at the server.

In another example, the regional networks are situated in different jurisdictions.

In another example, the first regional network comprises a national network.

In another example, the data structure divided into at least two substructures comprises the first substructure containing critical data and the second substructure does not contain critical data, wherein critical data is data for which laws of a country in whose jurisdiction the client is located imposes restrictions on the gathering, storing, accessing, disseminating and processing.

In another example, the critical data comprises personally identifiable information (PII).

In another example, the first data structure at the client side which is divided up comprises a request data structure.

In another example, a response to the request data structure is formulated by the server, wherein the response data structure responsive to the request contains a third substructure containing critical data as transformed by the anonymization module; and a fourth substructure not containing critical data. The fourth substructure not containing critical data is dispatched from the server to the network node with the storage module. The third substructure containing critical data is dispatched from the server to the network node with the anonymization module. The inverse transformation of the third substructure of the response data structure responsive to the request which contains critical data is performed by the anonymization module and a message as to the handling of the request is dispatched in the substructure to the client to whom the critical data belongs. The fourth substructure not containing critical data is obtained by the client from the second network node with the storage module.

In another example, the transformation of the fourth substructure of the response to the request not containing critical data is performed by the server.

In another example, the inverse transformation of the fourth substructure of the response to the request not containing critical data is performed by the client.

In another example, asymmetrical encryption is used for the transformation, where a private key is kept by the client and a public key is sent to the server.

In another example, the message for the client contains an identifier of the fourth substructure not containing critical data at the second network node with the storage module.

In another example, a system is provided for exchanging data in a client-server architecture. The system includes a plurality of network nodes including a first network node and a second network node, a client, and a server communicatively coupled to the client via the plurality of network nodes. The first network node includes an anonymization module and is situated in a first regional network different from a second network in which the server is located and not being in a same intranet as the server and the client. The second network node include a storage module and is situated in a third regional network different from the second network in which the server is located and not being in a same intranet as the server and the client. The client is configured to divide a first data structure intended for dispatch to a server into at least two substructures including a first substructure and a second substructure. The client is further configured to dispatch the first substructure from the client to the server across the first network node with the anonymization module, wherein data of the first substructure is transformed by the anonymization module. The client is configured to dispatch the second substructure from the client to the second network node with the storage module. The second substructure is received by the server from the network node with the storage module, and the obtained data substructures are combined into a second data structure by the server.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplarily pointed out in the claims.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig.1** - illustrates a system for data routing in a client-server architecture.
**Fig. 2** - illustrates an example of a method of data routing in a client-server architecture with the data structure being divided into substructures by the client.
**Fig. 3** - illustrates an example of the method of data routing in a client-server architecture when executing a request with identification of substructures in the data structure by an anonymization module.
**Fig. 4** - illustrates an example of the method of data routing in a client-server architecture with identification of substructures in the data structure by the client.
**Fig. 5** - illustrates an example of the method of data routing in a client-server architecture when executing a request with division of the data structure into substructures by the client.
**Fig. 6A** - illustrates an example of the method of data routing in a client-server architecture when dispatching data (for the compilation of statistics) with division of the data structure into substructures by the client.
**Fig. 6B** - illustrates an example of the method of data routing in a client-server architecture upon detecting a targeted attack on the client based on gathered information by the method of **Fig. 6A****.**
**Fig. 7** - illustrates an example of the method of data routing in a client-server architecture when executing a request with identification of substructures in the data structure by the anonymization module.
**Fig. 8** - illustrates an example of the method of data routing in a client-server architecture with identification of substructures in the data structure by the client.
**Fig. 9** - illustrates an example of the method of data routing in a client-server architecture when executing a request with division of the data structure into substructures by the client.
**Fig. 10** - illustrates a system of anonymous data exchange in a client-server architecture.
**Fig. 11** - illustrates an example of a method of data exchange in a client-server architecture, which is used to obtain data from clients in order to compile statistics on the server side.
**Fig. 12** - illustrates an example of the method of data exchange, which is used when executing a request of the client to the server.
**Fig. 13** - illustrates an example of the method of data exchange, when executing a request of the client to the server.
**Fig. 13A** - illustrates an example of the method of data exchange, when executing a request of the client to the server in asynchronous mode.
**Fig.14** - illustrates an example of a computer system on which the disclosed system and method can be implemented.

### DETAILED DESCRIPTION

Exemplary aspects are described herein in the context of a system, method, and computer program product for routing anonymous data in a client-server architecture. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

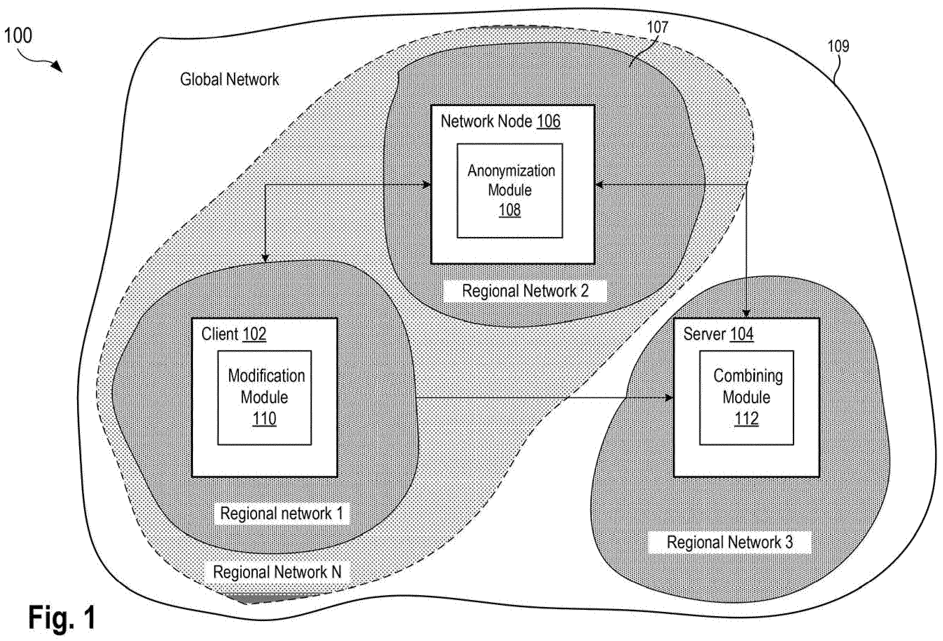

**Fig.** 1 illustrates a system 100 for data routing in a client-server architecture. The system 100 includes a client **102,** a server **104,** and a network node **106** with an anonymization module **108.** The server **104** may be part of a cloud infrastructure (not shown in the figure), while the client may be a user's device. The node **106** with the anonymization module **108** may be situated in a regional network **107** different from the regional network in which the server is situated (i.e., regional-network-2 and regional-network-3), and is not located in the same intranet as the server **104** or the client **102.** As used herein, a regional network **107** refers to a geographically dispersed network, bringing together computers at different points into a whole by communication means, the set of regional networks forming a global network **109.** In the context of the present disclosure, different regional networks **107** are not only geographically separated, but also are located in different jurisdictions (i.e., possibly subject to different regulations), so that in the context of the present disclosure the different regional networks may also include networks bringing together the nodes of countries (national networks). For example, in **Fig. 1****,** the Regional Network "1" is the network of the United States of America, the Regional Network "2" is the network of Germany and/or the European Union, and Regional Network "3" is the network of the Russian Federation.

The global network **109** of **Fig. 1** is the totality of all the regional networks **107,** or the world network, the Internet. In the terminology of the GDPR, for example, the regional network of the RF in which the server is situated will be considered to be a regional network of a third country.

In a particular instance, the regional network **107** of the node **106** with the anonymization module **108** is also different from the regional network of the client **102.** The arrows in **Fig.1** are depicted as originating from a network, and not from the client, since in the general case the external IP address is visible thanks to the use of internal address hiding technologies, particularly Proxy, NAT (Network Address Translation).

The client **102** may include a modification module **110** configured to divide one or more data structures (e.g., which are created for dispatching data from the client to the server) into substructures and to select a route for the obtained substructures. A data structure is a collection of data values generated and maintained by components of the system 100, including the client **102** and the server **104.** It is noted that some of the data values in the data structure may be "personal data", and therefore subject to data privacy policies and regulations. A substructure then is a type of data structure that contains a subset of the data values from the original data structure. By way of example, the data values in the data structure may include data submissions, user requests, data queries and/or query results, log data, state data of an application, records of user transaction(s), user-generated content, and other forms of data suitable for exchange in a client-server architecture. In some examples, a data structure may be in-memory data structures (e.g., linked lists, hash tables, trees, arrays, database records), or on-disk data structures (e.g., files, blobs). In other examples, a data structure may be one or more network data packet(s) configured for the transmission of the data values contained herein from the client to the server. The data structure may be serialized, in text format, in a structured format (e.g., Extendible Markup Language or XML, JavaScript Object Notation or JSON), or other format for information exchange.

There may be various criteria for the division of a data structure into substructures. One such criterion may be the presence of personally identifiable information or special categories thereof (in the terminology of the GDPR), whereby the data structure is divided up such that one substructure contains the personally identifiable information (also referred to as "PII") or special categories thereof, another substructure includes data which is not personally identifiable information (i.e., the other substructure does not contain PII). The characterization and assignment of data as personal data can be dictated, for example, by the laws of the country in the jurisdiction of which the user of the device being the client in the system being described is situated, in other words, according to the location of the data source.

Another criterion for the division of a data structure into substructures is the presence of critical data. Critical data is data on which the law or an authorized entity imposes restrictions on its gathering, storage, and processing. Critical data is generally sensitive with regard to divulgence, dissemination, and leakage, since the occurrence of these events will lead to a violation of the rights and interests of users, as protected by law, and liability is enforced against those who commit infractions of the rules for gathering, storing, accessing, and processing of such data. A particular case of critical data is confidential data (sensitive data) or confidential information. In the context of the present application, confidential data and confidential information are used synonymously. Confidential data refers to data which is protected in keeping with the legislation of the country in the jurisdiction of which the user of the device which is the client in the system being described is located. Confidential data in a particular case includes personally identifiable information (PII) and data containing commercial secrecy, tax secrecy, banking secrecy, medical secrecy, notarial secrecy, attorney secrecy, audit secrecy, communications secrecy, insurance secrecy, last testament secrecy, adoption secrecy, confessional secrecy, investigational secrecy, court proceedings secrecy, information on protected persons, and state secrecy. In one example, the critical data may include sensitive personal data, as specified under the GDPR, which is any data that reveals racial or ethnic origin, political opinions, religious or philosophical beliefs, trade union membership, data concerning health or sex life and sexual orientation, and genetic data or biometric data (e.g., for the purpose of uniquely identifying a natural person).

The anonymization module **108** is configured to perform a transformation and the inverse transformation of the substructures whose route passes through the node **106** with the anonymization module **108.** In one example, a transformation of substructures may be a transformation of the data contained in the substructure. In a particular instance, the methods of transformation of the data of the substructures may include one or more of quantization, sorting, merging (pasting), grouping, data set configuration, table substitution of values, calculated values, data encoding, encryption, and normalization (scaling).

Certain kinds of transformation may be applied not only to individual data in the substructure, but also to the substructure as a whole, for example tokenization and/or encryption. In a particular instance, the transformation is carried out with no possibility of an inverse transformation by any means other than the anonymization module **108** of the node. An inverse transformation refers to a transformation which restores the original form of an object of transformation (data, a substructure) prior to the transformation. Generally, a transformation may be any mapping (function) of a set onto itself, or in other words, transformations are mappings which translate a certain set into another set.

A substructure from the same client may be transformed by the anonymization module 108 by the same method or by different methods. If the transformation is carried out by the same method, then the transformed substructure or the data of the substructure from the same client will have an identical appearance; otherwise, they will differ and it will not be possible to compile statistics for the same client (perform a profiling).

The server **104** may include a combining module 112, which is configured to combine a data structure that was divided at the client side. The combining module 112 may combine data, for example, on the basis of unique identifiers, which are assigned to each substructure during the division and are identical for the substructures of the same structure. The combining module 112 receives substructures arriving at the server **104** by various network routes and combines them into a structure. The structure will clearly be different from the original one, divided at the client side, because the substructures passing through the node with the anonymization module **108** will be transformed by that module **108.** The resulting structure may be saved in a database (not shown in the figures).

In a particular instance, the anonymization module **108** obtains from the client a structure not divided into substructures by the modification module **110** of the client (for example, the structure of a request for the server), in which case, for the transmission to the server, the anonymization module **108** identifies in the obtained structure the substructures containing PII and performs a transformation of the data of the substructures; examples are given below.

The described system 100 is used for the anonymization of requests being dispatched to the server **104** and responses to these requests being dispatched to the client **102,** and also for obtaining data from clients **102** which is used for the compilation of statistics.

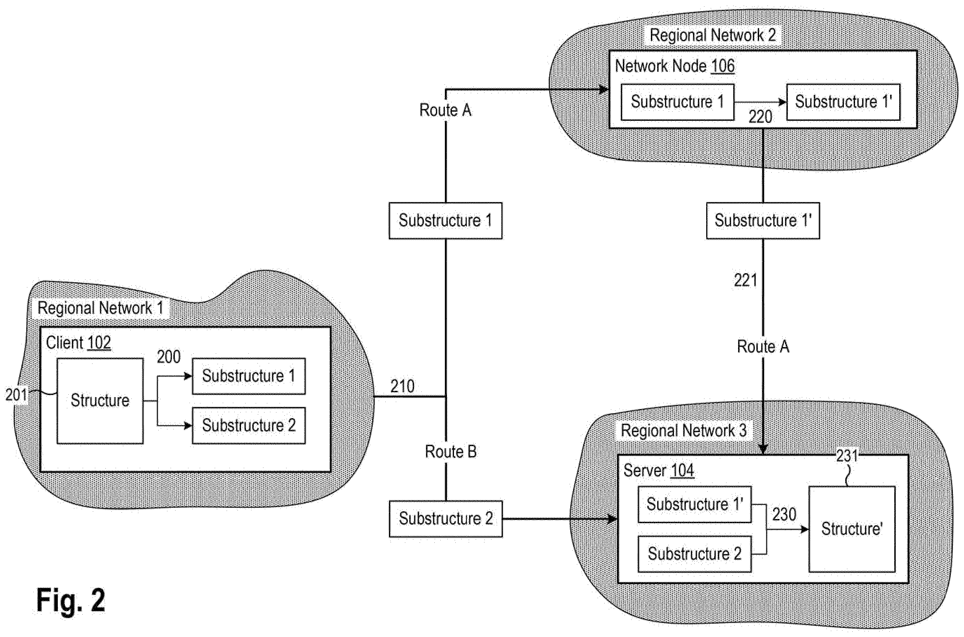

**Fig. 2** is a block diagram showing exemplary operations according to a method of routing data in a client-server architecture, which is used in a particular instance for obtaining data from clients for statistics compilation. In step **200** the modification module **110** (e.g., executing on the client **102**) divides the structure 201 intended for dispatch to the server in accordance with criteria, one such criterion possibly being the presence of PII in the structure, and as a result of the division there is obtained a substructure containing PII (in **Fig.2** this is the Substructure 1, by way of example) and one not containing PII (in **Fig.2** this corresponds to Substructure 2). Here and below, as the example of the criterion we shall use the presence of PII, and not the presence of critical or confidential data, even though what is valid for PII is also valid for critical or confidential data in general. In a particular instance, there may be more than one substructure of the first and second type, as well as more than one criterion by which the division is performed.

In step **210** the modification module **110** dispatches (i.e., transmits) the obtained substructures to the server **104,** the dispatching occurring by various routes (route A and route B), where one of the routes (e.g., Route A) includes the network node **106** with the anonymization module **108.** In an example, the modification module **110** may determine at least two routes for dispatching the at least two data substructures based on personal data contained in the one of the data substructures. The network node **106** is situated in a regional network different from the network where the server **104** is located and not in the same intranet as the server or the client **102.** When one of the substructures intended for dispatch to the server contains PII, the substructures will be directed to the server via the node with the anonymization module **108** (route A).

Then, in step **220,** the substructures passing through the node **106** with the anonymization module **108** are transformed by that module **108** and then sent to the server **104** (step **221**) in a transformed state. In the general case, the substructures from the same client are transformed differently at different moments in time. For example, a substructure having a client identifier sent at a first time period is transformed to include an anonymized identifier (AnonymizedID1) which is different a subsequent anonymized identifier (AnonymizedID2) from a substructure sent at a second time even if it came from the same client and had the same client identifier (i.e., Client ID -> AnonymizedID1 ≠ AnonymizedID2 ≠ AnonymizedID3 and so on), and this may pertain to all the examples. In a particular case, when it is necessary, for certain security systems, to assemble information (compile statistics) on a particular client, the transformation will be identical for a substructure from the same client (for example, Client ID -> AnonymizedID1 = AnonymizedID2 = AnonymizedID3 and so on).

In conclusion, in step **230** the substructures obtained from the client are combined into a structure 231 (Structure'). Clearly, the resulting structure (Structure') is different from the original one, since at least one substructure has been transformed by the anonymization module **108.** The resulting structure 231 will also be used in the database by the infrastructure at the server side. The infrastructure and database are omitted from the figure for clarity of illustration. Individual infrastructure elements such as a request processor 302 and an attack detection module 602 are indicated in other figures. The transformation of the substructures and/or data of the substructures by the anonymization module **108** is conducted in such a way as to exclude the possibility of an inverse transformation of the substructures and/or data of the substructures by any means other than the means of the network node **106** with the anonymization module **108.**

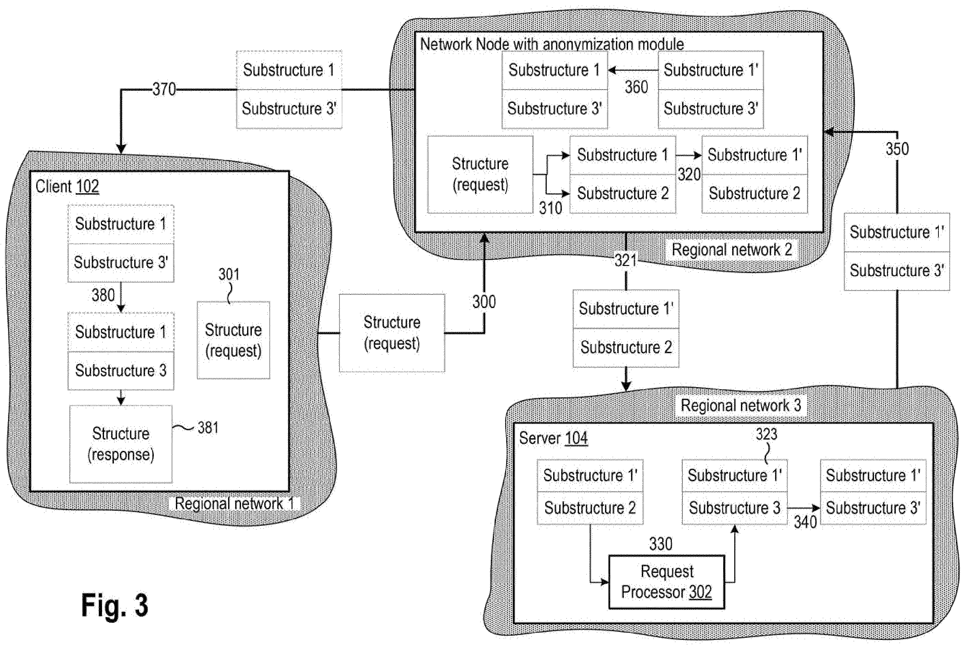

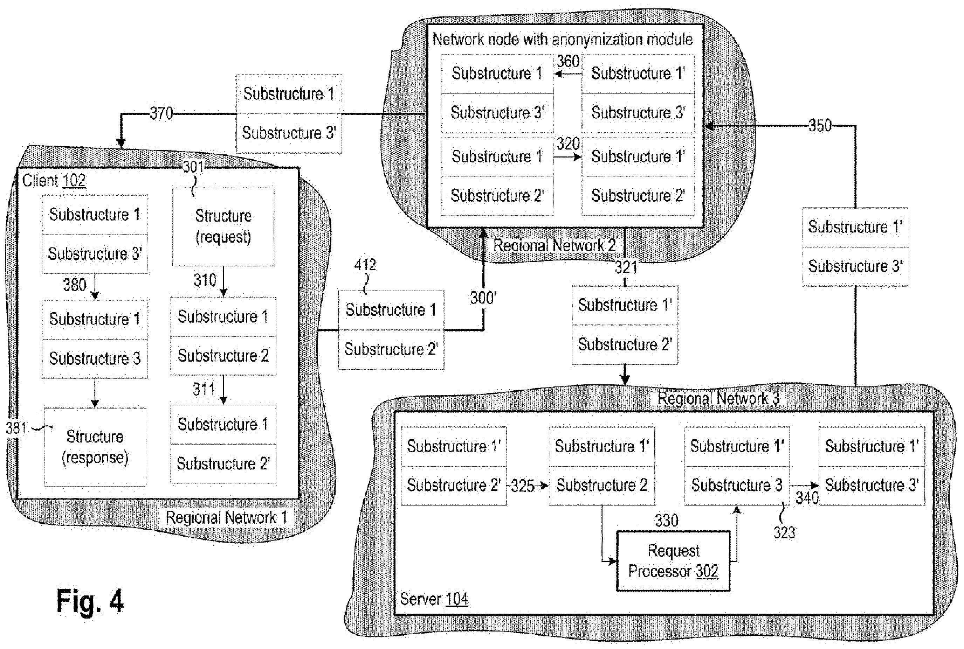

**Fig. 3** shows a routing method which is used, in a particular instance, for executing a request 301 of the client in relation to the server. In step **300** the request formulated at the client side is dispatched by the modification module **110** from the client **102** to the server **104,** the route including the network node **106** with the anonymization module **108,** said node being situated in a regional network different from the network where the server is located and not being in the same intranet as the server or the client. In a particular instance, some of the request data (not containing confidential data) may be transformed by the modification module **110** at the client side, wherein the transformation may be carried out such that it is impossible for the anonymization module **108** to perform the inverse transformation (step **311** in **Fig. 4**) and only the server **104** can perform the inverse transformation (step **325** in **Fig. 4**)**.** By way of example, the transformation and inverse transformation may be performed using asymmetrical encryption techniques, where the client **102** has a public key and the server **104** has a private key. As used herein, unless otherwise indicated, the term "transformation" refers to a forward transformation.

Next, in step **310,** the anonymization module **108** identifies substructures in the data structure of the request intended for dispatch to the server in accordance with criteria, one such criterion possibly being the presence of PII, obtaining as a result of the identification a substructure containing PII (in **Fig. 3****,** by analogy with the previous example, this is Substructure 1) and one not containing PII (in **Fig. 3** this is Substructure 2). In step **320,** the anonymization module **108** is used to perform a transformation (a forward transformation from original to transformed) of the data substructure (and/or the data in the substructure) containing PII, and the anonymization module **108** is used to dispatch the resulting data structure of the request with the transformed substructure containing PII to the server (step **321**)**.**

In response to the request received, the server in step **330** generates a response **323** using a request processor **302.** In regards to the data of the request which may have been transformed by the client **102** in a particular instance, the server **104** first performs an inverse transformation (step **325** in **Fig. 4****,** as described later). The data structure **323** of the response to the request, in the example with PII, contains the following substructures: (1) at least one substructure(s) containing PII transformed by the anonymization module **108** (Substructure 1', extracted from the request structure); and at least one substructure(s) not containing PII (Substructure 3, containing the body of the response to the request or the payload of the response).

The data not containing PII (Substructure 3) may be transformed (forward transformation) without the possibility of an inverse transformation by the anonymization module **108** (Substructure 3'), this being done in step **340.** The inverse transformation of this data may only be performed by the modification module **110** of the client (e.g., asymmetrical encryption in which the server has a public key and the client a private key), in step **350** the resulting data structure **324** of the response to the request is dispatched from the server to the network node with the anonymization module **108.** The anonymization module **108** in step **360** is used to perform the inverse transformation of the data substructures of the response **324** to the request containing PII (Substructure 1'). The inverse transformation is done with respect to the data which was transformed in step **320** (inverse transformation from transformed data to original data contained initially in the request from the client). The obtained data structure is redirected to the client (step **370**) and the modification module **110** of the client in step **380** is used to perform the inverse transformation of the data substructures of the response to the request not containing PII transformed by the server in step **340.** As a result, the client **102** generates a data structure 381 containing data substructures of the response to the request not containing PII transformed by the server.

**Fig. 4** shows an example of the method shown in **Fig. 3****,** but in this example step **310** for identifying the substructures is performed not by the anonymization module **108,** but by the modification module **110** of the client, followed by transformation of the substructure in step **311.** By analogy with the example in **Fig. 3****,** the substructure not containing PII (Substructure 2) is subjected to the transformation. Therefore, step **300'** in **Fig. 4** differs from the analogous step **300** of the method in **Fig. 3** in that it is not the original data structure of the request which is sent to the node with the anonymization module **108,** but rather the transformed structure **412** after performing steps **310** and **311.** Accordingly, in this example, step **325** is added, where there is performed at first an inverse transformation of the substructure (in the example, Substructure 2', not containing PII) that was transformed in step **311,** before performing step **330.**

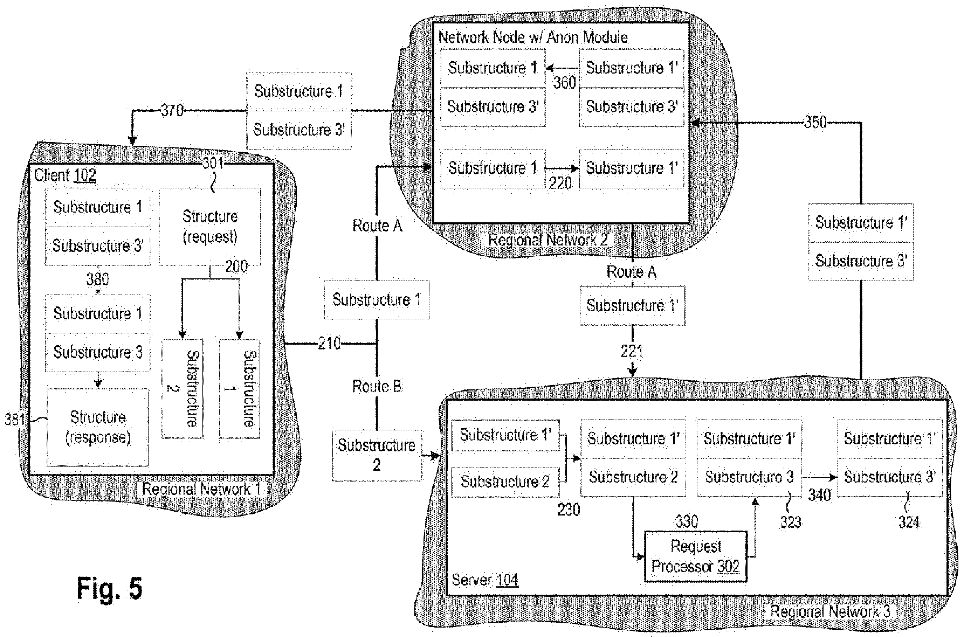

**Fig. 5** shows an example of the method of data routing in a client-server architecture in which steps **200** to **230** are analogous to the steps of the method shown in **Fig. 2****,** while steps **300** to **380** are analogous to the steps of the method shown in **Fig. 3****.** In a particular case, the Substructure 2 before being dispatched directly to the server may first be transformed, by analogy with step **311** in **Fig. 4****,** and then step **325** is added in the diagram of the method, besides step **311.**

In a particular instance, in the method shown in **Fig. 3** - **Fig. 5****,** the data structure dispatched to the client **102** by the node **106** with the anonymization module **108** in step **370** does not contain a data substructure with PII (in the examples, Substructure 1). That substructure needs to be saved until this step, in order to determine the addressee of the response; after this, there is no need for it in the particular instance.

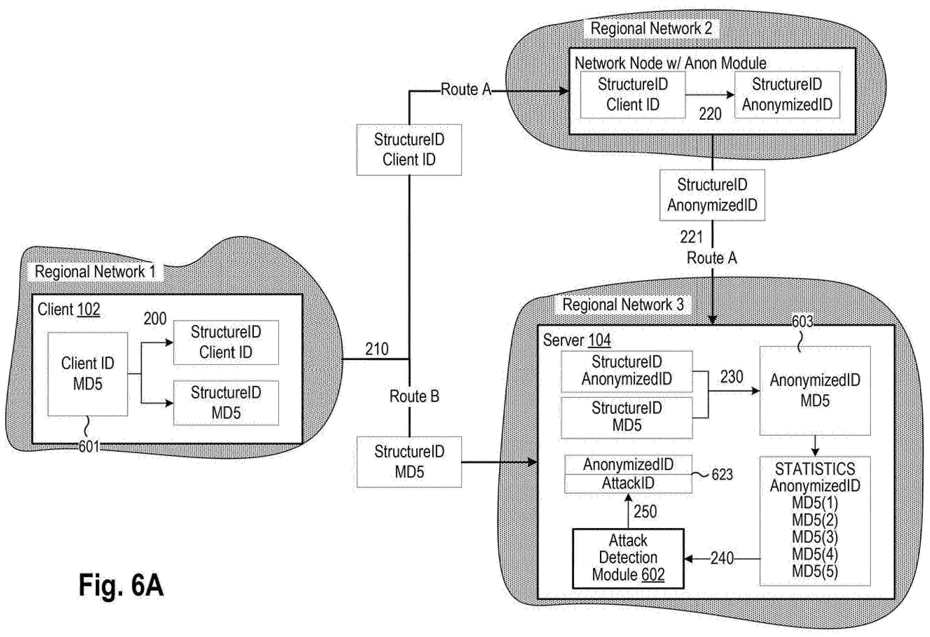

**Fig. 6a** shows exemplary operations of the method shown in **Fig. 2****.** The client 102 is communicatively connected to a system for remote detection of targeted attacks, such as an attack detection module 602, located on the server side. To permit full operation of the attack detection module 602, it may be necessary to obtain information from the client 102 as to files with malicious code (malicious files) detected at various times and to compile statistics on the basis of the information obtained (often, in compliance with the national legislation on personally identifiable information, this still needs to be done anonymously). Upon detecting several such malicious files based on information received from the client, a conclusion is made at the server side that a targeted attack has been detected on the client.

For the transmission of information to the server pertaining to the malicious file detected, the client 102 generates a data structure **601** which includes a client identifier ("clientID") and information pertaining to the malicious file detected ("MD5") of the malicious file detected. In step **200** the modification module **110** divides the formed data structure **601** intended for dispatch to the server into substructures, obtaining as a result of the division a substructure containing the Client ID and a substructure containing the MD5 of the file. In order to know which structure the substructures are a part of, they are assigned an identifier (in the figure the identifier is denoted as StructureID). In step **210** the modification module **110** of the client transmits the obtained substructures to the server **104,** the transmission occurring by different routes (route A and route B), where one of the routes (route A) includes a network node **106** with the anonymization module **108,** said node **106** being situated in a regional network different from the network where the server is located, and not being in the same intranet as the server or the client. The substructure containing the Client ID is directed to the server **104** across the node **106** with the anonymization module **108** (route A). In step **220** the anonymization module **108** performs the transformation of the client ID, where the client ID is saved at the node, and replaces it in the substructure with the token AnonymizedID (in a particular instance, the client ID may be encrypted). The obtained substructure is dispatched to the server (step **221**)**.** In conclusion, in step **230** the substructures received from the client are combined into a structure **603.** Clearly, the resulting structure **603** differs from the original one (**601**), since at least one substructure was transformed by the anonymization module **108.** The resulting structure **603** is saved at the server **104** (or in any given database of the infrastructure to which the server belongs) and will be used by the server to assemble information (denoted in the figure as STATISTICS) on the client **102** from whom the structure was obtained. In step **240** the assembled information will be used by the attack detection module **602** and if the attack detection module **602** detects an attack then in step **250** the attack detection module **602** generates a data structure **623** containing a substructure with the AnonymizedID and a substructure containing information on the attack (denoted in the figure as AttackID); the obtained structure **623** will be addressed to the client to give notice of the attack.

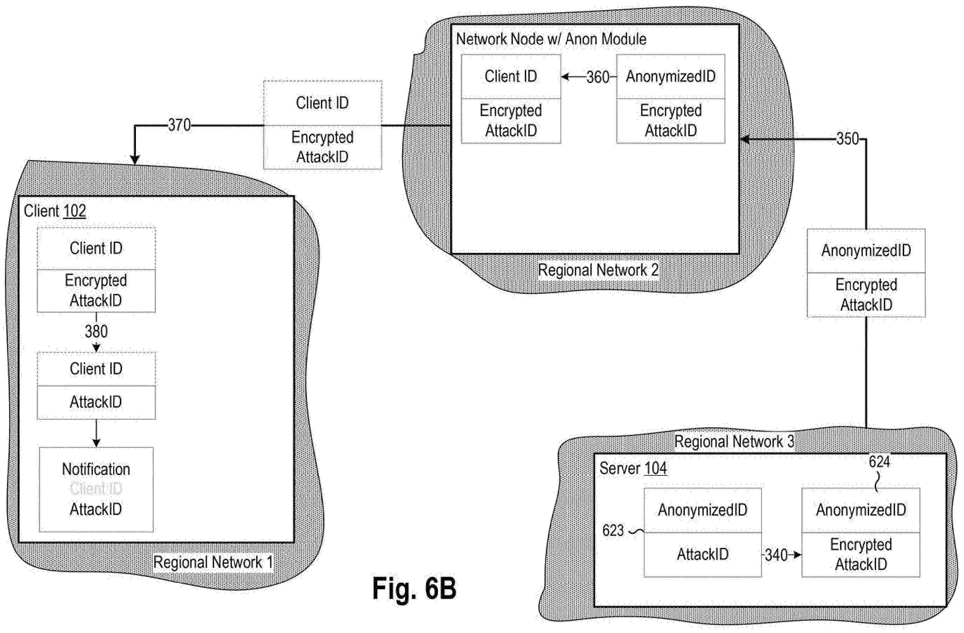

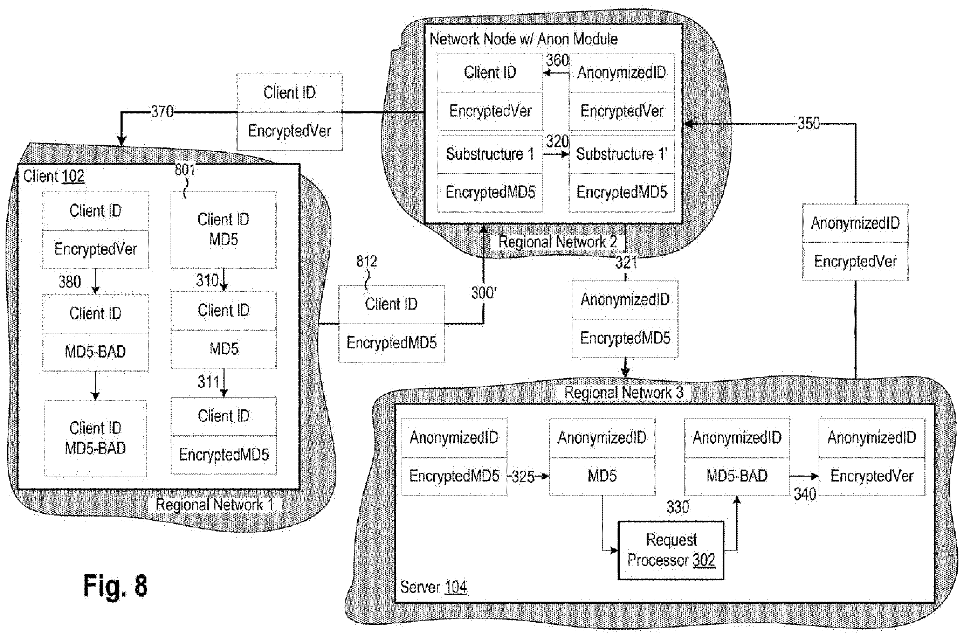

An example of the method of dispatching is shown in **Fig. 6b****,** steps **340** to **380** being analogous to the steps of the example shown in **Fig. 8****.** In a particular instance, information about the attack might not be transformed, but rather be dispatched in open form; in that case, the example will lack the steps **340** and **380.** In the examples shown in **Fig. 6b** as well as in the other Figures of the present disclosure, optional and alternative examples are depicted in dashed outline or in a light font, such as the clientID field in the obtained response in step **370.**

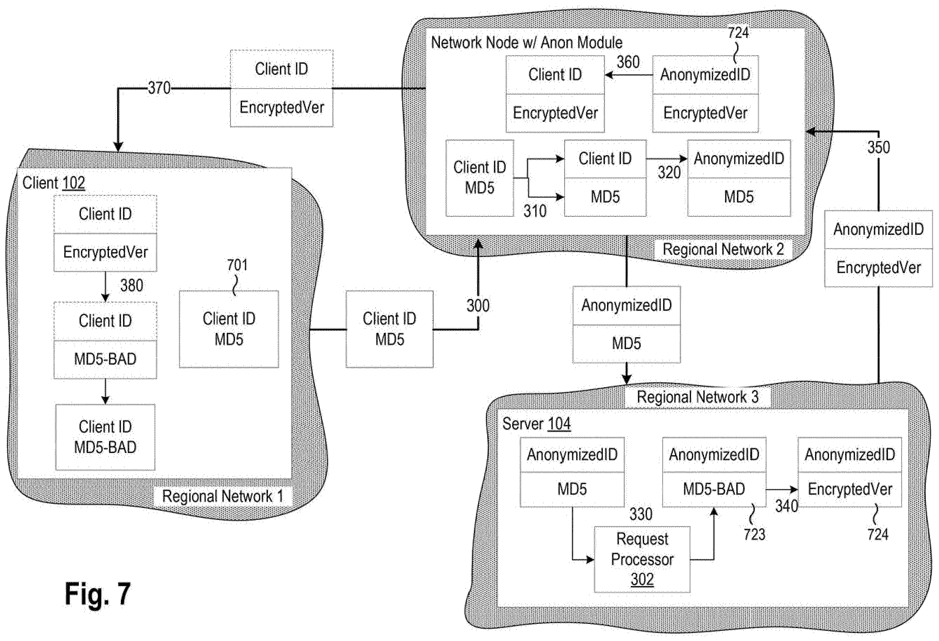

**Fig. 7** shows another example operation of the present disclosure. The client device **102** has detected a new file, which needs to be scanned for the presence of malicious code by the server **104.** For this, it is necessary to dispatch information about the file to the server, in the present example this being the file's MD5, for which the client generates a request data structure **701.** For this purpose, in order to tell the server to whom the response should be dispatched, the modification module **110** (e.g., executing at the client **102**) inserts in the request data structure **701** a client ID, such that the request data structure **701** includes the client ID and the file MD5. In step **300** the generated request is dispatched by the modification module **110** to the server, the route including the network node **106** with the anonymization module **108,** said node being situated in a regional network different from the network where the server is located, and not being in the same intranet as the server or the client. Next, in step **310,** the anonymization module **108** identifies substructures in the structure **701** intended for dispatch to the server, obtaining as a result of the identification a substructure containing the client ID and a substructure containing the file's MD5. In step **320,** the anonymization module **108** performs a transformation of the client ID, where the client ID is saved at the node **106,** and this is replaced in the substructure by the token AnonymizedID (in a particular instance, the client ID may be encrypted). The obtained data structure of the request with the transformed substructure is dispatched to the server (step **321**)**.** A response **723** to the request received is generated in step **330** by the request processor **302** of the server **104.** The request processor **302** extracts from the structure the file MD5 and issues a verdict indicating that the file under analysis at the client is malicious, for example, "MD5-BAD". The data structure **723** of the response to the request contains the following substructures: (1) at least one substructure containing the token AnonymizedID (or the client ID encrypted by the anonymization module **108**); and (2) at least one substructure containing a verdict for the file (MD5-BAD).

In this regard, the verdict in step **340** is transformed by the server **104** without possibility of an inverse transformation by the anonymization module **108,** for example by encrypting it with a public key (the transformed verdict is denoted in the figure as EncryptedVer), the private key is kept at the client, and the inverse transformation may only be performed by the modification module **110** of the client. In step **350** the obtained data structure **724** of the response to the request is dispatched from the server to the network node **106** with the anonymization module **108.** The anonymization module **108** in step **360** performs the inverse transformation of the data substructure of the response **724** to the request containing the token AnonymizedID by the anonymization module **108,** where in the case of a token the token is replaced by the previously saved client ID, and in the case where the client ID was encrypted it is then decrypted. Thus, the transformation is performed with regard to the data which was transformed in step **320.** The obtained data structure is redirected to the client (step **370**) and the modification module **110** of the client in step **380** performs the inverse transformation of the verdict transformed by the server in step **340;** in the example, it is decrypted with the aid of the private key. In a particular instance, AnonymizedID is for the same client ID, but they will be different in different transmissions.

**Fig. 8** shows an example of the example shown in **Fig. 7****.** In this example the step **310** after identification of the substructures is performed not by the anonymization module **108,** but by the modification module **110** of the client **102** with later transformation of the substructure saving information about the file (the file's MD5) by encryption with the public key (in the figure the transformed information about the file is denoted as EncryptedMD5); the private key is kept at the server and the inverse transformation may be performed only at the server. Thus, step **300'** of the example in **Fig. 8** differs from the analogous step of the example in **Fig. 7** in that it is not the original structure of the request (e.g., **801**) which is sent to the node with the anonymization module **108,** but rather the transformed one (data structure **812**), after performing steps **310** and **311.** Accordingly, therefore, step **325** is added, where prior to performing step **330** an inverse transformation is done for the encrypted information about the file by decrypting it with the aid of the private key.

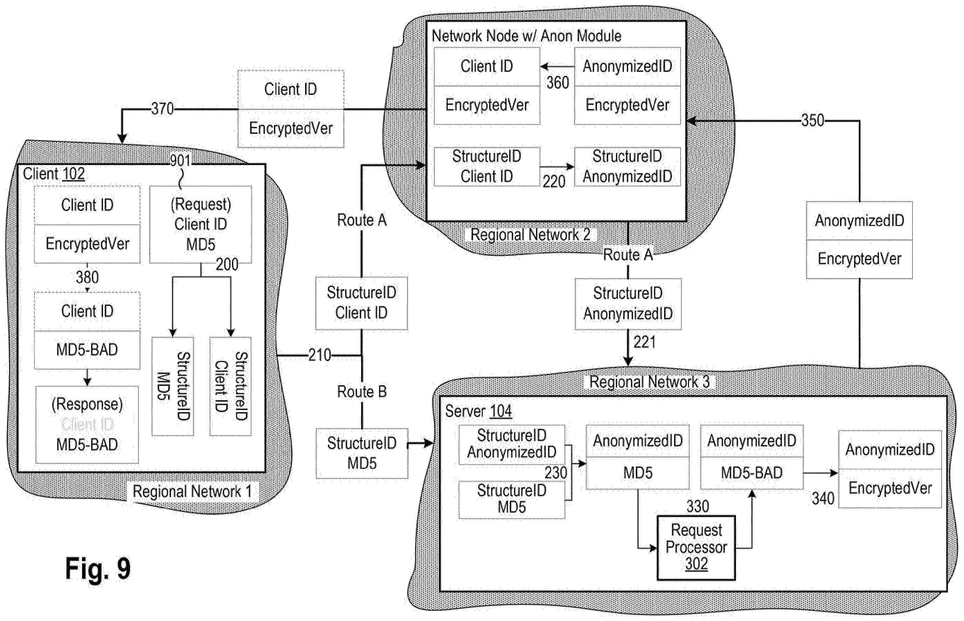

**Fig. 9** shows an example of data routing in a client-server architecture in which steps **200** to **230** are analogous to the steps of the example shown in **Fig. 6a****,** while steps **330** to **380** are analogous to the steps of the example shown in **Fig. 7****.** In a particular instance, the information about the file may first be transformed prior to being dispatched directly to the server, by analogy with step **311** in the example of **Fig. 8****,** so that step **325** is added in the example, besides step **311.**

The modification module **110** of the client intercepts the structures **901** intended for dispatch to the server, divides these structures in accordance with established rules, and selects routes for these substructures also in accordance with rules. The rules by which the modification module **110** functions are established in a particular instance according to one or more information technology policies configured to comply with the existing regulations and legislation in the jurisdiction of which the client device **102** (the source) is operating. Therefore, in order to apply the rules the modification module **110** of the client determines the location of the device (source), the type of data in the formed data structure **901,** the purpose of the data structure (e.g., the type of transmission: request or statistics, where dispatching of data to the server for compilation of statistics at the server side), the location of the data recipient. On this basis in accordance with the rules the modification module **110** selects the route for the data and the method of transformation at the client side. One example of formalized rules is presented in Table 1, where the "Method" column indicates the correlated method for transforming can include the following approaches: "Method 1" is characterized as including the division of a data structure at the client side (see **Fig. 2****);** "Method 2" is characterized as including the identification of the data structure at the node with the anonymization module **108** (see **Fig. 3**); "Method 3" is characterized as including the identification of the data structure at the client side (see **Fig. 4**)**.**

As indicated above, the rules may be given by the requirements of regulations/legislation (such as the GDPR) and just like any given legal norm include a hypothesis and a disposition, which corresponds in algorithmic language to an ***if - then*** construction. Thus, the provided Table 1 formalizes a rule in the following format:
***IF [type, source, recipient, personally identifiable information (yes*/*no)], THEN (method, location of anonymization node, method of transformation for the data]***

Consider an example data structure, in which the modification module **110** determines that: the type of transmission is a request, the source (client) is Germany, the recipient (server) is the Russian Federation, and the structure contains personally identifiable information. In accordance with the rules, the modification module **110** identifies the substructure with PII at the client side (as in step **310** of **Fig. 4** - method 2) and dispatches it via the USA, encrypts the substructure without PII by the public key (as in step 311 of **Fig. 4****),** and transforms the personally identifiable information by the anonymization module **108** by encryption.

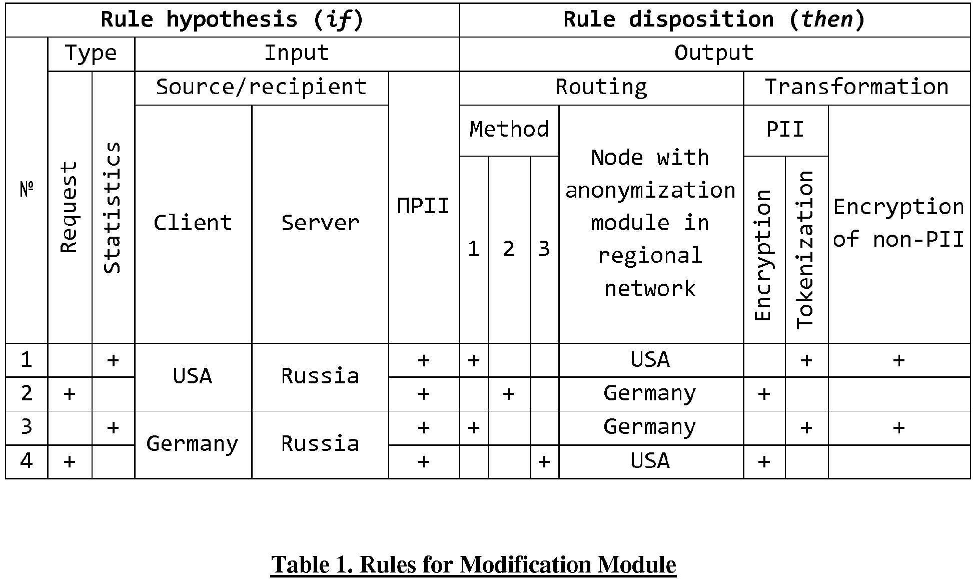

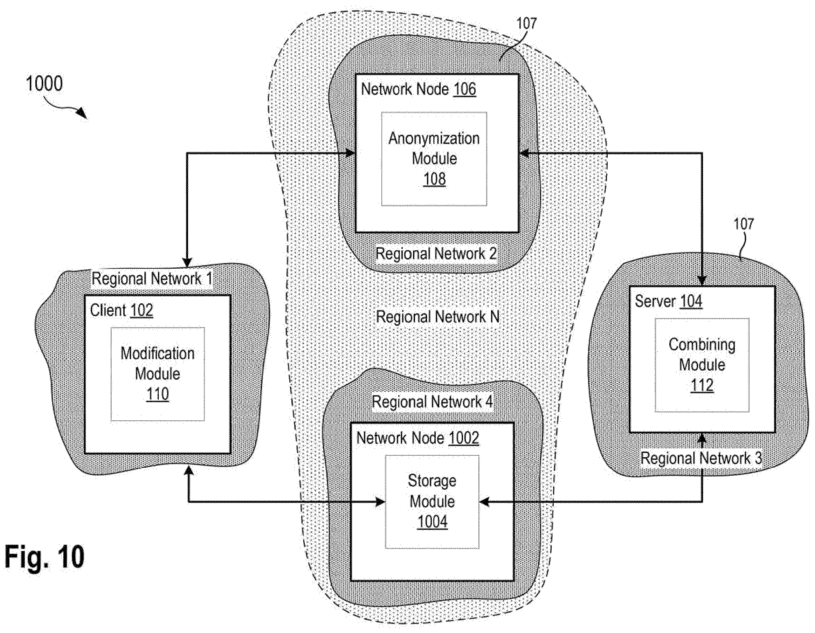

**Fig. 10** illustrates an example system **1000** of anonymous data exchange in a client-server architecture, similar to the system shown in **Fig. 1****,** except the system **1000** includes a network node **1002** with a storage module **1004.** The storage module 1004 may include one or more storage devices. The network node **1002** with the storage module **1004** is situated in a regional network **107** different from the regional network in which the server is located and is not in the same intranet as the server or the client. In a particular instance, the network node **1002** with the storage module **1004** may be in the same regional network as the network node **106** with the anonymization module **108;** such a network is indicated in **Fig. 10** as "Regional Network N". The purpose of the network node **1002** with storage module **1004** is to hide the external IP address of the client **102** from the server **104** and relieve the burden of the node **106** where the anonymization module **108** is located, so that the volume of traffic passing through the node **106** with the anonymization module **108** is reduced. The network node **1002** with the storage module **1004** is an intermediate repository for data being exchanged by the client with the server.

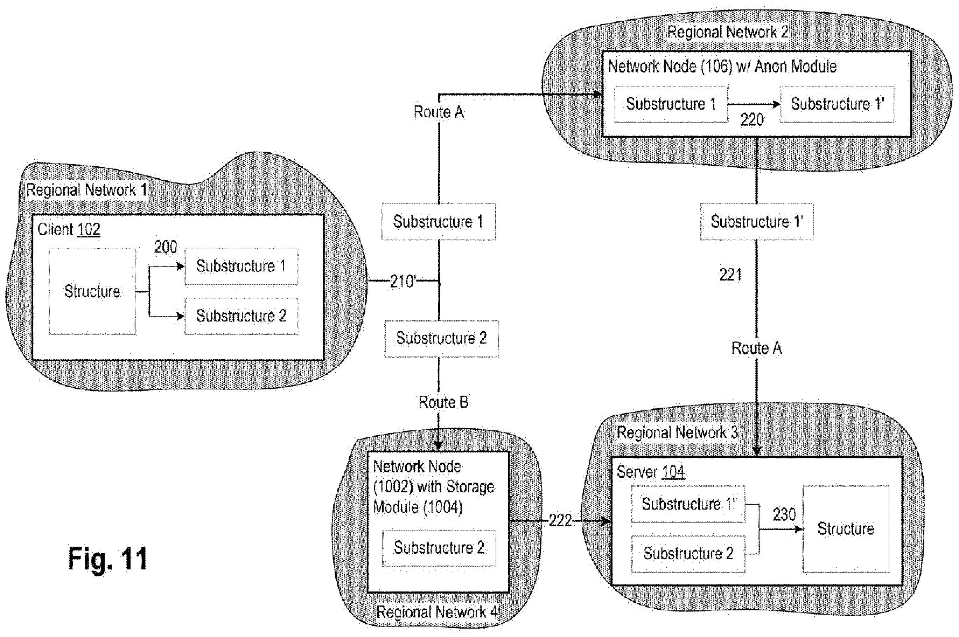

The system **1000** shown in **Fig. 10** is used for the anonymous exchange of data between a client and a server, including for the transmission of data from clients which are used to compile statistics and for client-server interaction of the "request-response" type. **Fig. 11** shows the method of anonymous exchange of data between a client and a server, which in a particular instance is used to obtain data from clients for the compilation of statistics on the server side. The steps **200, 221, 220, 230** are analogous to the steps shown in **Fig. 2****.** Step **210'** differs from the analogous one and step **222** is added. In **Fig. 2** *route B* went directly from client to server, but in the example being described in **Fig. 11** this route is broken up, and the client dispatches Substructure 2 not to the server, but to the node with the storage module **1004.** Then, in step **222** this substructure will be received by the server. The initiator of the transmission of this substructure to the server in step **222** may be either the node **1002** with the storage module **1004** or the server **104,** which downloads the Substructure 2 on demand when it receives via *route A* the Substructure 1' with the identifier of Substructure 2 that was saved by the network node **1002** with storage module **1004.**

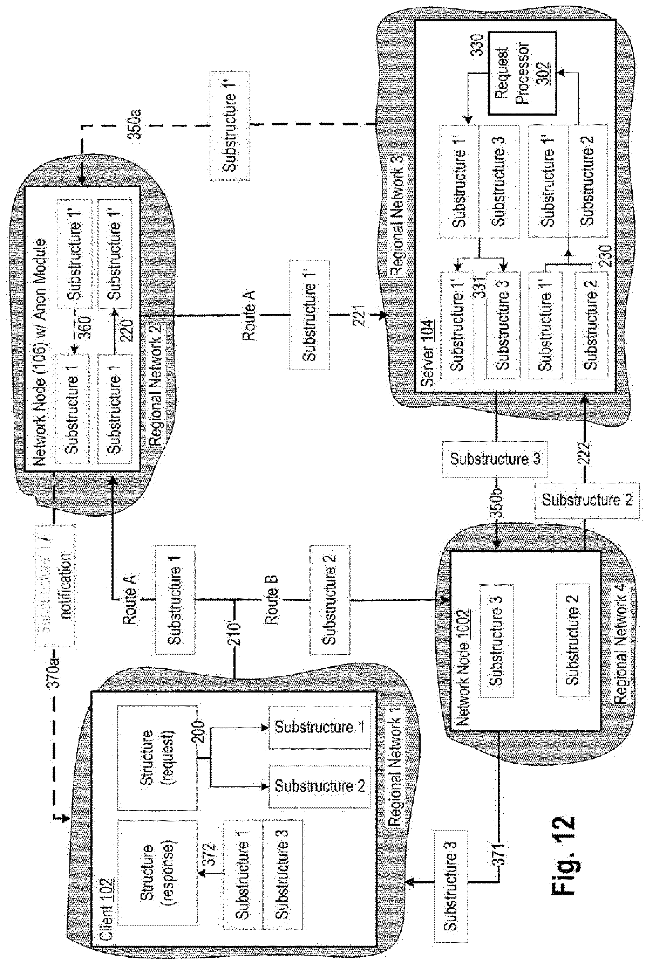

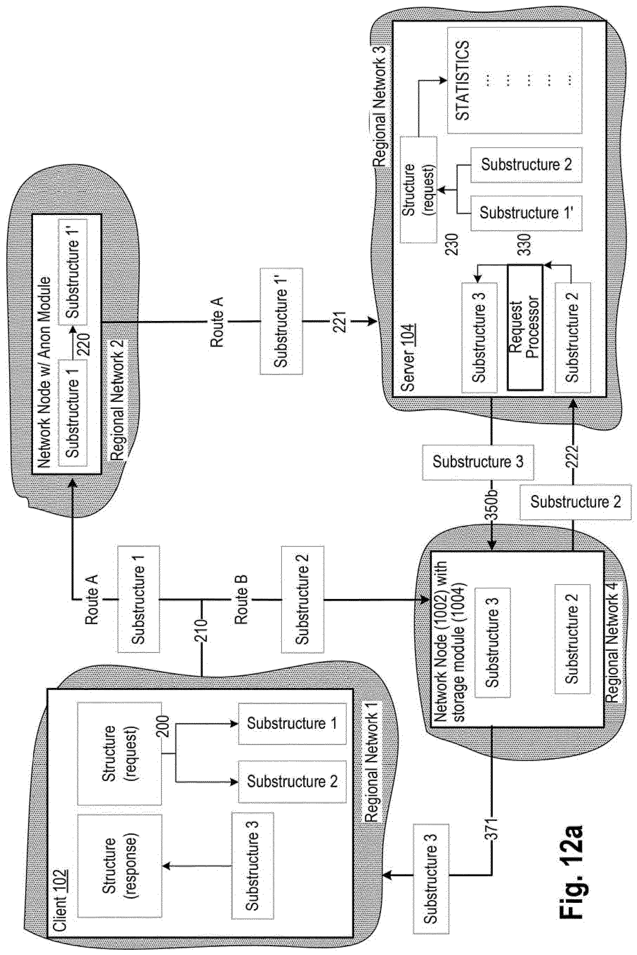

**Fig. 12** shows a method of data exchange which is used in a particular instance for executing a request of a client to the server. The steps **200, 221, 220, 230** are analogous to the steps shown in **Fig. 2****,** the steps **210', 222** are analogous to the steps shown in **Fig. 11****,** the step **330** is analogous to this same step in **Fig. 3****.** Thus, the dispatching of a request to the server is analogous to the dispatching of data to the server for the compilation of statistics, as shown in **Fig. 11****;** the distinctions from all that was described above include how the response, prepared in step **330,** is dispatched. The structure of the response to the request, formulated in step **330,** is broken up into at least two substructures in step **331:** (1) at least one substructure containing PII transformed by the anonymization module **108** (e.g., Substructure 1', extracted from the request structure); and (2) at least one substructure not containing PII (e.g., Substructure 3, containing the body of the response to the request or the payload of the response).

In step **350a** the substructure containing PII is dispatched from the server **104** to the **106** node with the anonymization module **108,** where in step **360** a transformation will be performed which is the inverse of the transformation performed in step **220.** The substructure not containing PII (in Fig. 12 *Substructure 3*) is dispatched in step **350b** to the network node **1002** with the storage module **1004.** Next, the substructure not containing PII will be sent to the client in step **371.** Embodiments whereby the client receives the substructure in step **371** may be different. If step **350a** is carried out, then after the transformation in step **360** the node with the anonymization module **108** will dispatch a notification (message) to the client in step **370a** that the response is ready; after this, the client accesses the node with the storage module **1004** and receives the substructure not containing PII from the node with the storage module **1004.** The notification in step **370a** may contain, for example, a unique identifier assigned to the Substructure 3 in the process of dividing the structure of the response to the request in step **331,** the substructure with this identifier being requested by the client from the network node **1002** with the storage module **1004.** In a particular instance, steps **350a, 360, 370a** might not be performed. In this case, the identifier assigned to the substructures in the process of division in step **200** will be analogous to the identifier assigned in step **331** and the client in step **371** will obtain the Substructure 3 by periodically polling the node with the storage module **1004** as to the arrival there of the substructure with the corresponding identifier. If steps **350a, 360, 370a** are not performed, the structure of the response to the request is identical to the substructure not containing PII (Substructure 3), to which a unique identifier is assigned. In another particular instance, the node with the storage module **1004** independently dispatches the Substructure 3 to the client in step **371;** in this case, the session identifier is used, which was established between the client and the node with the storage module **1004** to carry out step **210;** in the given case, the unique identifiers assigned to the substructures in steps **200** and **331** are equal and they are equal to the session identifier. In this case, when the node receives the Substructure 3 in step **350b,** it will read the identifier of Substructure 3 and forward it to the client whose session has the same identifier; the primary condition for the performance of this example is the maintaining of the session between client and node with the storage module **1004** until the end of the data exchange between the client and the server when executing the request and dispatching the response.

In a particular instance, the scheme described in **Fig. 12** may operate in an asynchronous mode; in this case, step 330 is carried out without performing step **230,** the data of *Substructure* 2 is used, and the obtained *Substructure 3,* omitting step **331,** is dispatched to the node with the storage module **1004** (step **350b**). Step **230** will be performed independently of step **330.** Such a mode increases the speed of the server's response and is used in the event that only the data contained in the substructure not containing CD is needed for the processing of the request. A combining of the substructures (step **230**) in such cases is only necessary to compile statistics, as in the example shown in **Fig. 12a****.**

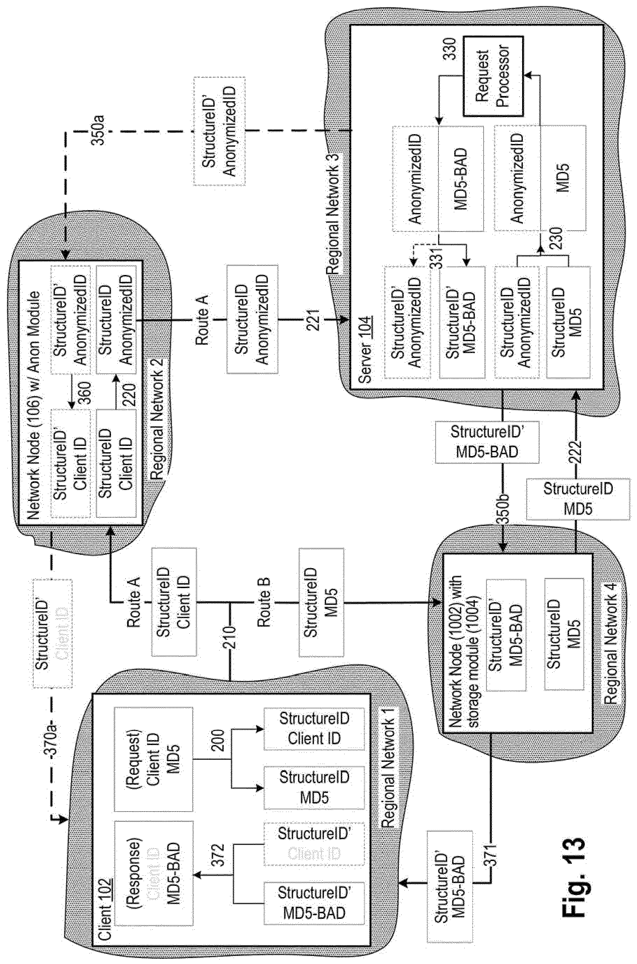

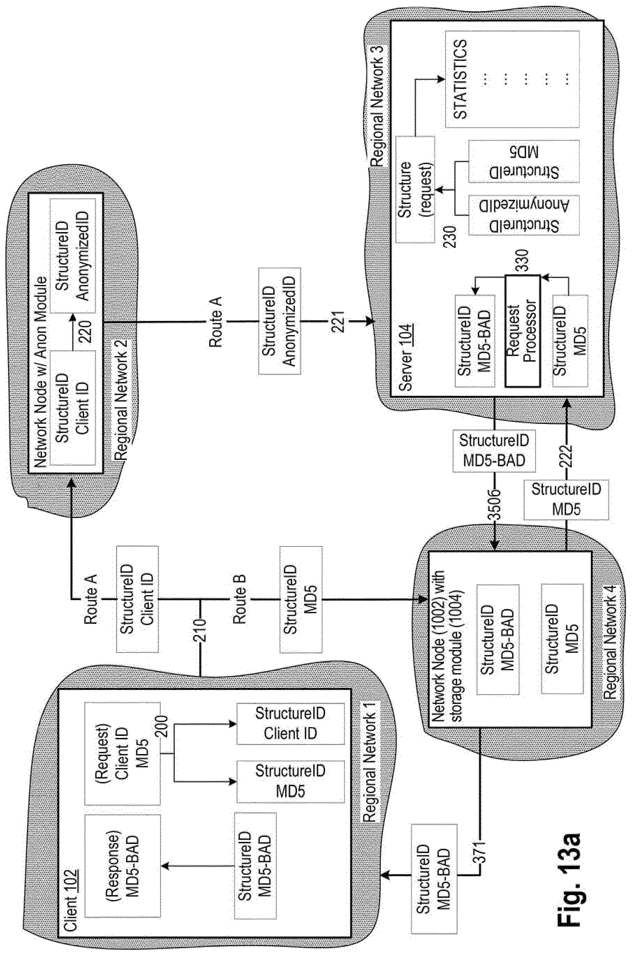

**Fig. 13** shows an example of the use of the method illustrated in **Fig. 12** in order to obtain a verdict (dangerous/malicious or safe) for a file detected on the client side from the server. For the transmission to the server of information about the detected file (in the present example, the information about the file is the MD5 of the file), a data structure is formed which includes the client ID and the MD5 of the detected file. In step **200** the modification module **110** divides the formulated structure, intended for transmission to the server, into substructures, obtaining as a result of the division a substructure containing the client ID and a substructure containing the MD5 of the file; in order to know which structure the substructures are a part of, they are assigned an identifier (in the figure the identifier is denoted as StructureID). In step **210** the modification module **110** of the client dispatches the obtained substructures. The dispatching is done by different routes (route A and route B) and to different recipients. Via *route A* the substructure is dispatched to the server, route A including the network node with the anonymization module **108,** said node being situated in a regional network different from the network where the server is located, and not being in the same intranet as the server or the client. The substructure containing the client ID is sent to the server via the node with the anonymization module **108** (route A). Via *route B* the substructure is dispatched to the network node **1002** with the storage module **1004,** said node being situated in a regional network different from the network where the server is located, and not being in the same intranet as the server or the client. The substructure containing the MD5 of the file is sent to the network node **1002** with the storage module **1004** (route B). In step **220** the anonymization module **108** is used to perform a transformation of the client ID, where the client ID is saved at the node, and it replaces this in the substructure with the token AnonymizedID (in a particular instance, the client ID may be encrypted). The obtained substructure is dispatched to the server (step **221**)**.** In step **222** the substructure with the MD5 of the file will be received by the server. If the method is carried out in synchronous mode, then in step **230** the substructures obtained by the server in step **221** and step **222** will be combined and the response will be processed in step **330.** In the example, MD5 will be scanned according to a base of malicious and safe files and according to the results of the scan a verdict will be produced and a response formulated to the request (in the given example, the file proved to be malicious - MD5-BAD). The formulated response to the request is divided in step **331** into two substructures, as a result of the division one obtains a substructure containing the client ID and a substructure containing the verdict (MD5), in order to know which structure the substructures are a part of, they are assigned an identifier (denoted in the figure as StructureID); in a particular instance, the identifier may be identical to the identifier assigned to the substructures in step **200.** In step **350b** the substructure with the verdict is dispatched to the network node **1002** with the storage module **1004,** which either forwards the substructure to the client in step 371 (if StructureID corresponds to the session ID between the node and the client established in step **210**), or it is saved until needed. This substructure may be needed by the client in event of receiving a notification from the node with the received anonymization module **108** of the clients as a result of the execution of steps **350a, 360, 370a.** In another example, the client may constantly poll the network node **1002** with the storage module **1004** as to the presence of the response substructure at the node (in this case, the StructureID assigned to the substructures in steps **200** and **331** should be identical). In step **372** the client processes the response. If the method is carried out in asynchronous mode (Fig. 13a), then step **230** and step **330** are performed independently. The StructureID in step **330** does not change and is identical to the StructureID in step **200,** and in a particular instance is equal to the session ID between the client and the node with the storage module **1004** of step **210,** in which context a transmission of the substructure will also take place in step **371.**

The invention make it possible to decentralize the data coming from a client, which provides anonymity for the user whose device is the client; the data being exchanged by the client with the server cannot be associated with the client upon accessing the server. Some of the data is known only to the server, some only to the network node with the anonymization module **108,** and the data cannot be de-anonymized without simultaneous access to these system components, while the impossibility of simultaneous access to the components, including by government structures, is assured by distributing the system components among different regional networks, differing both in geographical respect and in respect of territorial jurisdiction. When utilizing a node with a storage module **1004,** the external IP address of the client may be hidden from the server (the server does not pick up the substructure directly from the client, but instead via the node with the storage module **1004**), and the burden on the node with the anonymization module **108** is reduced.

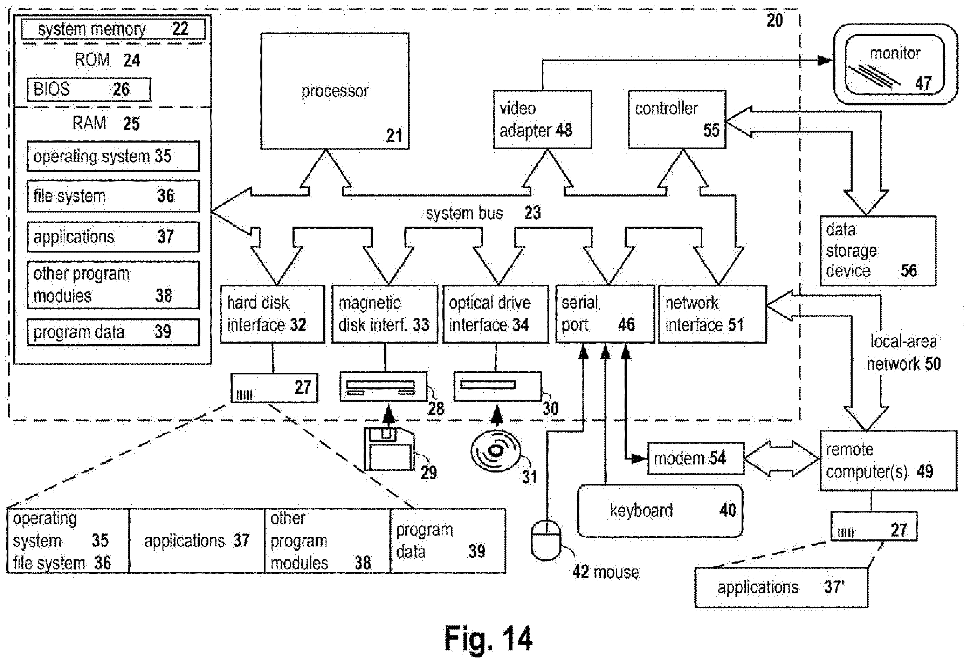

In the present disclosure, the terms modification module, anonymization module, combining module, request processor, attack detection module, and storage module are understood to mean real-world devices, systems, components and groups of components, realized with the use of hardware such as integrated microcircuits (application-specific integrated circuit, ASIC) or a field-programmable gate array (FPGA) or for example in the form of a combination of software and hardware, such as a microprocessor system and a set of program instructions, and also on the basis of neuromorphic chips (neurosynaptic chips). The functionality of said means may be realized solely by hardware, and also in the form of a combination, where some of the functionality is realized by software and some by hardware. In certain examples, the modules may be executed on the processor of a computer (such as the one shown in **Fig. 14**)**.** The databases may be realized by every possible method and may be contained either on a single physical medium or on different ones, both local and remote.

**Fig. 14** is a block diagram illustrating a computer system **20** on which systems and methods for transmitting data in a client-server architecture may be implemented in accordance with an exemplary aspect. It should be noted that the computer system **20** can correspond to the client **102,** server **104,** network nodes **106** and **1002,** for example, described earlier.

As shown, the computer system **20** (which may be a personal computer or a server) includes a central processing unit **21,** a system memory **22,** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33,** and the optical drive interface **34,** respectively. The drives and the corresponding computer information media are power-independent modules for storage of computer instructions, data structures, program modules, and other data of the computer system **20.**

In one example, a hard disk **27,** a removable magnetic disk **29** and a removable optical disk **31** are connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc.* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are nonlimiting examples of numerous well-understood ways of establishing a connection by one computer to another using communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in **Fig. 14****,** above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A method for exchanging data in between a client and a server, the method comprising:
dividing (200), by the client (102), a first data structure intended for dispatch to the server (104) into a first substructure that contains critical data and a second substructure that does not contain the critical data, wherein the first data structure comprises a request data structure and wherein the critical data is data for which laws of a country in whose jurisdiction the client is located imposes restrictions on the gathering, storing, accessing, disseminating and processing;
selecting, by the client (102), different network routes between the client (102) and the server for the first and second substructures based on presence of the critical data in the first substructure;
dispatching (210) the first substructure from the client (102) to the server (104) via a first route that includes a first network node with an anonymization module (108), wherein the data of the first substructure is transformed by the anonymization module (108), and wherein the first network node is situated in a first regional network different from a second network in which the server (104) is located and not being in a same intranet as the client (102);
dispatching (220) the second substructure from the client (102) to the server via a second route that includes a second network node with a storage module (1004) comprising an intermediate repository for the data being exchanged between the client (102) and the server, wherein the second network node is situated in a third regional network different from the second network in which the server (104) is located and not being in a same intranet as the client (102); and
wherein the data substructures received via the first route and second route by the server are combined (230) into a second data structure by the server (104);
wherein the method is **characterized in that** it further comprises:
receiving, by the client, a response to the request data structure from the server (104), wherein the response data structure responsive to the request contains a third substructure containing critical data as transformed by the anonymization module (108); and a fourth substructure not containing critical data based on processing the second substructure;
wherein the fourth substructure not containing critical data is dispatched from the server (104) to the network node with the storage module (1004);
wherein the third substructure containing critical data is dispatched from the server (104) to the network node with the anonymization module (108);
wherein an inverse transformation of the third substructure of the response data structure responsive to the request which contains critical data is performed by the anonymization module (108) and a message as to the handling of the request is dispatched in the substructure to the client (102) to whom the critical data belongs; and
wherein the fourth substructure not containing critical data is obtained by the client (102) from the second network node with the storage module (1004).

2. The method according to claim 1, wherein a first transformation of the data substructures is done by the client (102) using a one-way function such that an inverse transformation of the data cannot be performed by the anonymization module (108).

3. The method according to claim 2, wherein a second transformation of the data structure in transit is done by the anonymization module (108) using a one-way function such that an inverse transformation cannot be performed by the server (104) and by the client (102).

4. The method according to claim 1, wherein the transformation is performed by an encryption module.

5. The method according to claim 4, wherein the data of the second substructure not containing critical data is transformed using asymmetrical encryption, where a public key is sent to the client (102) and a private key is kept at the server (104).

6. The method according to any of claims 1 to 5, in which the regional networks are situated in different jurisdictions.

7. The method of according to any of claims 1 to 5, in which the first regional network comprises a national network.

8. The method according to claim 1, wherein the critical data comprises personally identifiable information (PII).

9. The method according to claim 1, wherein a transformation of the fourth substructure of the response to the request not containing critical data is performed by the server (104).

10. The method according to claim 9, wherein an inverse transformation of the fourth substructure of the response to the request not containing critical data is performed by the client (102).

11. The method according to claim 10, wherein asymmetrical encryption is used for the transformation, where a private key is kept by the client (102) and a public key is sent to the server (104).

12. The method according to claim 1, wherein the message for the client (102) contains an identifier of the fourth substructure not containing critical data at the second network node with the storage module (1004).

13. A system (100) for exchanging data in a client-server architecture, the system (100) comprising:
a plurality of network nodes including a first network node and a second network node; a client (102); and
a server (104) communicatively coupled to the client (102) via the plurality of network nodes;
wherein the first network node includes an anonymization module (108) and is situated in a first regional network different from a second network in which the server (104) is located and not being in a same intranet as the client (102);
wherein the second network node include a storage module (1004) comprising an intermediate repository for the data being exchanged between the client (102) and the server and is situated in a third regional network different from the second network in which the server (104) is located and not being in a same intranet as the client (102);
wherein the client (102) is configured to divide a first data structure intended for dispatch to the server (104) into a first substructure that contains critical data and a second substructure that does not contain the critical data, wherein the critical data is data for which laws of a country in whose jurisdiction the client (102) is located imposes restrictions on the gathering, storing accessing, disseminating and processing;
wherein the client is configured to select different network routes between the client and the server for the first and second substructures based on presence of the critical data in the first substructure;
wherein the client (102) is configured to dispatch the first substructure from the client (102) to the server (104) via a first route that includes the first network node with the anonymization module (108), wherein the data of the first substructure is transformed by the anonymization module (108),
wherein the client (102) is configured to dispatch the second substructure from the client (102) to the server via a second route that includes the second network node with the storage module (1004); and
wherein the client is configured to select first route or the second route based on presence of the critical data in a corresponding substructure;
wherein the server is configured to combine data substructures received via the first route and second route into a second data structure;
wherein the system is **characterized in that** the server (104) is configured further to dispatch to the client a response to the request data structure, wherein the response data structure responsive to the request contains a third substructure containing critical data as transformed by the anonymization module (108); and a fourth substructure not containing critical data based on processing the second substructure;
wherein the fourth substructure not containing critical data is dispatched from the server (104) to the network node with the storage module (1004);
wherein the third substructure containing critical data is dispatched from the server (104) to the network node with the anonymization module (108);
wherein an inverse transformation of the third substructure of the response data structure responsive to the request which contains critical data is performed by the anonymization module (108) and a message as to the handling of the request is dispatched in the substructure to the client (102) to whom the critical data belongs; and
wherein the fourth substructure not containing critical data is obtained by the client (102) from the second network node with the storage module (1004).

## Patentansprüche

1. Verfahren zum Austauschen von Daten zwischen einem Client und einem Server, wobei das Verfahren umfasst:
Aufteilen (200), durch den Client (102), einer ersten Datenstruktur, die zum Dispatch bzw. Versand an den Server (104) bestimmt ist, in eine erste Unterstruktur, die kritische Daten enthält, und eine zweite Unterstruktur, die die kritischen Daten nicht enthält, wobei die erste Datenstruktur eine Anforderungsdatenstruktur umfasst und wobei die kritischen Daten Daten sind, für welche die Gesetze eines Landes, in dessen Gerichtsbarkeit sich der Client befindet, Beschränkungen für die Erhebung, Speicherung, den Zugriff, die Verbreitung und die Verarbeitung auferlegen;
Auswählen, durch den Client (102), unterschiedlicher Netzwerkrouten zwischen dem Client (102) und dem Server für die erste und zweite Unterstruktur basierend auf einem Vorhandensein der kritischen Daten in der ersten Unterstruktur;
Dispatchen bzw. Versenden (210) der ersten Unterstruktur von dem Client (102) an den Server (104) über eine erste Route, die einen ersten Netzwerkknoten mit einem Anonymisierungsmodul (108) enthält, wobei die Daten der ersten Unterstruktur durch das Anonymisierungsmodul (108) transformiert werden, und wobei sich der erste Netzwerkknoten in einem ersten regionalen Netzwerk befindet, das sich von einem zweiten Netzwerk unterscheidet, in dem sich der Server (104) befindet, und sich nicht in demselben Intranet wie der Client (102) befindet;
Dispatchen bzw. Versenden (220) der zweiten Unterstruktur von dem Client (102) an den Server über eine zweite Route, die einen zweiten Netzwerkknoten mit einem Speichermodul (1004) enthält, das einen Zwischenspeicher für die zwischen dem Client (102) und dem Server ausgetauschten Daten umfasst, wobei sich der zweite Netzwerkknoten in einem dritten regionalen Netzwerk befindet, das sich von dem zweiten Netzwerk unterscheidet, in dem sich der Server (104) befindet, und sich nicht in demselben Intranet wie der Client (102) befindet; und
wobei die Datenunterstrukturen, die von dem Server über die erste Route und die zweite Route empfangen werden, durch den Server (104) zu einer zweiten Datenstruktur kombiniert (230) werden;
wobei das Verfahren **dadurch gekennzeichnet ist, dass** es ferner umfasst:
Empfangen, durch den Client, einer Antwort auf die Anforderungsdatenstruktur von dem Server (104), wobei die auf die Anforderung ansprechende Antwortdatenstruktur eine dritte Unterstruktur, die kritische Daten enthält, die bzw. wie sie von dem Anonymisierungsmodul (108) transformiert werden; und
eine vierte Unterstruktur enthält, die keine kritischen Daten enthält, und zwar basierend auf einer Verarbeitung der zweiten Unterstruktur;
wobei die vierte Unterstruktur, die keine kritischen Daten enthält, von dem Server (104) an den Netzwerkknoten mit dem Speichermodul (1004) dispatcht bzw. versendet wird;
wobei die dritte Unterstruktur, die kritische Daten enthält, von dem Server (104) an den Netzwerkknoten mit dem Anonymisierungsmodul (108) dispatcht bzw. versendet wird;
wobei eine inverse Transformation der dritten Unterstruktur der Antwortdatenstruktur ansprechend auf die Anfrage, die kritische Daten enthält, durch das Anonymisierungsmodul (108) durchgeführt wird und eine Nachricht über die Bearbeitung der Anfrage in der Unterstruktur an den Client (102) dispatcht bzw. versendet wird, dem die kritischen Daten gehören; und
wobei die vierte Unterstruktur, die keine kritischen Daten enthält, durch den Client (102) von dem zweiten Netzwerkknoten mit dem Speichermodul (1004) erhalten wird.

2. Verfahren nach Anspruch 1, wobei eine erste Transformation der Datenunterstrukturen durch den Client (102) unter Verwendung einer Einwegfunktion erfolgt, so dass eine inverse Transformation der Daten nicht durch das Anonymisierungsmodul (108) durchgeführt werden kann.

3. Verfahren nach Anspruch 2, wobei eine zweite Transformation der Datenstruktur während der Übertragung durch das Anonymisierungsmodul (108) unter Verwendung einer Einwegfunktion erfolgt, so dass eine inverse Transformation nicht durch den Server (104) und den Client (102) durchgeführt werden kann.

4. Verfahren nach Anspruch 1, wobei die Transformation durch ein Verschlüsselungsmodul durchgeführt wird.

5. Verfahren nach Anspruch 4, wobei die Daten der zweiten Unterstruktur, die keine kritischen Daten enthält, unter Verwendung einer asymmetrischen Verschlüsselung transformiert werden, wobei ein öffentlicher Schlüssel an den Client (102) gesendet und ein privater Schlüssel an dem Server (104) aufbewahrt wird.

6. Verfahren nach einem der Ansprüche 1 bis 5, wobei sich die regionalen Netzwerke in unterschiedlichen Gerichtsbarkeiten befinden.

7. Verfahren nach einem der Ansprüche 1 bis 5, wobei das erste regionale Netzwerk ein nationales Netzwerk umfasst.

8. Verfahren nach Anspruch 1, wobei die kritischen Daten personenbezogene Informationen (PII) umfassen.

9. Verfahren nach Anspruch 1, wobei eine Transformation der vierten Unterstruktur der Antwort auf die Anfrage, die keine kritischen Daten enthält, durch den Server (104) durchgeführt wird.

10. Verfahren nach Anspruch 9, wobei eine inverse Transformation der vierten Unterstruktur der Antwort auf die Anfrage, die keine kritischen Daten enthält, durch den Client (102) durchgeführt wird.

11. Verfahren nach Anspruch 10, wobei für die Transformation asymmetrische Verschlüsselung verwendet wird, wobei ein privater Schlüssel durch den Client (102) aufbewahrt und ein öffentlicher Schlüssel an den Server (104) gesendet wird.

12. Verfahren nach Anspruch 1, wobei die Nachricht für den Client (102) eine Kennung der vierten Unterstruktur, die keine kritischen Daten enthält, an dem zweiten Netzwerkknoten mit dem Speichermodul (1004) enthält.

13. System (100) zum Austauschen von Daten in einer Client-Server-Architektur, wobei das System (100) umfasst:
eine Mehrzahl von Netzwerkknoten, die einen ersten Netzwerkknoten und einen zweiten Netzwerkknoten enthalten;
einen Client (102); und
einen Server (104), der mit dem Client (102) über die Mehrzahl von Netzwerkknoten kommunikativ gekoppelt ist;
wobei der erste Netzwerkknoten ein Anonymisierungsmodul (108) enthält und sich in einem ersten regionalen Netzwerk befindet, das sich von einem zweiten Netzwerk unterscheidet, in dem sich der Server (104) befindet, und sich nicht in demselben Intranet wie der Client (102) befindet;
wobei der zweite Netzwerkknoten ein Speichermodul (1004) enthält, das einen Zwischenspeicher für die Daten umfasst, die zwischen dem Client (102) und dem Server ausgetauscht werden, und sich in einem dritten regionalen Netzwerk befindet, das sich von dem zweiten Netzwerk unterscheidet, in dem sich der Server (104) befindet, und sich nicht in demselben Intranet wie der Client (102) befindet;
wobei der Client (102) konfiguriert ist, eine erste Datenstruktur, die zum Dispatch bzw. Versand an den Server (104) bestimmt ist, in eine erste Unterstruktur, die kritische Daten enthält, und eine zweite Unterstruktur, die die kritischen Daten nicht enthält, aufzuteilen, wobei die kritischen Daten Daten sind, für welche die Gesetze eines Landes, in dessen Gerichtsbarkeit sich der Client (102) befindet, Beschränkungen für die Erhebung, Speicherung, den Zugriff, die Verbreitung und die Verarbeitung auferlegen;
wobei der Client konfiguriert ist, unterschiedliche Netzwerkrouten zwischen dem Client und dem Server für die erste und zweite Unterstruktur basierend auf einem Vorhandensein der kritischen Daten in der ersten Unterstruktur auszuwählen;
wobei der Client (102) konfiguriert ist, die erste Unterstruktur von dem Client (102) an den Server (104) über eine erste Route, die den ersten Netzwerkknoten mit dem Anonymisierungsmodul enthält (108), zu dispatchen bzw. zu versenden, wobei die Daten der ersten Unterstruktur durch das Anonymisierungsmodul (108) transformiert werden,
wobei der Client (102) konfiguriert ist, die zweite Unterstruktur von dem Client (102) an den Server über eine zweite Route, die den zweiten Netzwerkknoten mit dem Speichermodul (1004) enthält, zu dispatchen bzw. zu versenden; und
wobei der Client konfiguriert ist, die erste Route oder die zweite Route basierend auf einem Vorhandensein der kritischen Daten in einer entsprechenden Unterstruktur auszuwählen;
wobei der Server konfiguriert ist, Datenunterstrukturen, die über die erste Route und die zweite Route empfangen werden, zu einer zweiten Datenstruktur zu kombinieren;
wobei das System **dadurch gekennzeichnet ist, dass** der Server (104) ferner konfiguriert ist zum Dispatch bzw. Versand, an den Client, einer Antwort auf die Anforderungsdatenstruktur, wobei die auf die Anforderung ansprechende Antwortdatenstruktur eine dritte Unterstruktur, die kritische Daten enthält, die bzw. wie sie von dem Anonymisierungsmodul (108) transformiert werden; und
eine vierte Unterstruktur enthält, die keine kritischen Daten enthält, und zwar basierend auf einer Verarbeitung der zweiten Unterstruktur;
wobei die vierte Unterstruktur, die keine kritischen Daten enthält, von dem Server (104) an den Netzwerkknoten mit dem Speichermodul (1004) dispatcht bzw. versendet wird;
wobei die dritte Unterstruktur, die kritische Daten enthält, von dem Server (104) an den Netzwerkknoten mit dem Anonymisierungsmodul (108) dispatcht bzw. versendet wird;
wobei eine inverse Transformation der dritten Unterstruktur der Antwortdatenstruktur ansprechend auf die Anfrage, die kritische Daten enthält, durch das Anonymisierungsmodul (108) durchgeführt wird und eine Nachricht über die Bearbeitung der Anfrage in der Unterstruktur an den Client (102) dispatcht bzw. versendet wird, dem die kritischen Daten gehören; und
wobei die vierte Unterstruktur, die keine kritischen Daten enthält, durch den Client (102) von dem zweiten Netzwerkknoten mit dem Speichermodul (1004) erhalten wird.

## Revendications

1. Procédé d'échange de données entre un client et un serveur, le procédé comprenant :
la division (200), par le client (102), d'une première structure de données destinée à être envoyée au serveur (104) en une première sous-structure qui contient des données critiques et une deuxième sous-structure qui ne contient pas les données critiques, où la première structure de données comprend une structure de données de requête et où les données critiques sont des données pour lesquelles des lois d'un pays dans la juridiction duquel se situe le client imposent des restrictions sur la collecte, le stockage, l'accès, la diffusion et le traitement ;
la sélection, par le client (102), d'itinéraires de réseau différents entre le client (102) et le serveur pour les première et deuxième sous-structures, sur la base d'une présence des données critiques dans la première sous-structure ;
l'envoi (210) de la première sous-structure du client (102) au serveur (104) via un premier itinéraire qui comprend un premier noeud de réseau avec un module d'anonymisation (108), les données de la première sous-structure étant transformées par le module d'anonymisation (108), et le premier noeud de réseau étant situé dans un premier réseau régional différent d'un deuxième réseau dans lequel se situe le serveur (104) et n'étant pas dans un même intranet que le client (102) ;
l'envoi (220) de la deuxième sous-structure du client (102) au serveur via un second itinéraire qui comprend un second noeud de réseau avec un module de stockage (1004) comprenant un référentiel intermédiaire pour les données qui sont échangées entre le client (102) et le serveur, où le second noeud de réseau est situé dans un troisième réseau régional qui est différent du deuxième réseau dans lequel se situe le serveur (104) et n'est pas dans un même intranet que le client (102) ; et
dans lequel les sous-structures de données reçues via le premier itinéraire et le second itinéraire par le serveur sont combinées (230) en une seconde structure de données par le serveur (104) ;
dans lequel le procédé est **caractérisé en ce qu'**il comprend en outre :
la réception, par le client, d'une réponse à la structure de données de requête en provenance du serveur (104), où la structure de données de réponse répondant à la requête contient une troisième sous-structure contenant des données critiques telles que transformées par le module d'anonymisation (108) ; et une quatrième sous-structure ne contenant pas de données critiques basées sur le traitement de la deuxième sous-structure ;
où la quatrième sous-structure ne contenant pas de données critiques est envoyée du serveur (104) au noeud de réseau avec le module de stockage (1004) ;
où la troisième sous-structure contenant des données critiques est envoyée du serveur (104) au noeud de réseau avec le module d'anonymisation (108) ;
où une transformation inverse de la troisième sous-structure de la structure de données de réponse répondant à la requête qui contient des données critiques est réalisée par le module d'anonymisation (108), et un message concernant la manipulation de la requête est envoyé dans la sous-structure au client (102) auquel appartiennent les données critiques ; et
où la quatrième sous-structure ne contenant pas de données critiques est obtenue par le client (102) en provenance du second noeud de réseau avec le module de stockage (1004).

2. Procédé selon la revendication 1, dans lequel une première transformation des sous-structures de données est effectuée par le client (102) en utilisant une fonction unidirectionnelle telle qu'une transformation inverse des données ne puisse pas être réalisée par le module d'anonymisation (108).

3. Procédé selon la revendication 2, dans lequel une seconde transformation de la structure de données en transit est effectuée par le module d'anonymisation (108) en utilisant une fonction unidirectionnelle telle qu'une transformation inverse ne puisse pas être réalisée par le serveur (104) et par le client (102).

4. Procédé selon la revendication 1, dans lequel la transformation est réalisée par un module de chiffrement.

5. Procédé selon la revendication 4, dans lequel les données de la deuxième sous-structure ne contenant pas de données critiques sont transformées en utilisant un chiffrement asymétrique, où une clé publique est envoyée au client (102) et une clé privée est conservée au niveau du serveur (104).

6. Procédé selon l'une quelconque des revendications 1 à 5, dans lequel les réseaux régionaux sont situés dans des juridictions différentes.

7. Procédé selon l'une quelconque des revendications 1 à 5, dans lequel le premier réseau régional comprend un réseau national.

8. Procédé selon la revendication 1, dans lequel les données critiques comprennent des informations personnelles identifiables (PII).

9. Procédé selon la revendication 1, dans lequel une transformation de la quatrième sous-structure de la réponse à la requête ne contenant pas de données critiques est réalisée par le serveur (104).

10. Procédé selon la revendication 9, dans lequel une transformation inverse de la quatrième sous-structure de la réponse à la requête ne contenant pas de données critiques est réalisée par le client (102).

11. Procédé selon la revendication 10, dans lequel un chiffrement asymétrique est utilisé pour la transformation, où une clé privée est conservée par le client (102) et une clé publique est envoyée au serveur (104).

12. Procédé selon la revendication 1, dans lequel le message pour le client (102) contient un identifiant de la quatrième sous-structure ne contenant pas de données critiques au niveau du second noeud de réseau avec le module de stockage (1004).

13. Système (100) pour l'échange de données dans une architecture client-serveur, le système (100) comprenant :
une pluralité de noeuds de réseau comprenant un premier noeud de réseau et un second noeud de réseau ;
un client (102) ; et
un serveur (104) couplé en communication avec le client (102) via la pluralité de noeuds de réseau ;
dans lequel le premier noeud de réseau comprend un module d'anonymisation (108) et est situé dans un premier réseau régional différent d'un deuxième réseau dans lequel se situe le serveur (104) et n'étant pas dans un même intranet que le client (102) ;
dans lequel le second noeud de réseau comprend un module de stockage (1004) comprenant un référentiel intermédiaire pour les données qui sont échangées entre le client (102) et le serveur, et est situé dans un troisième réseau régional différent du deuxième réseau dans lequel se situe le serveur (104) et n'étant pas dans un même intranet que le client (102) ;
dans lequel le client (102) est configuré pour diviser une première structure de données destinée à être envoyée au serveur (104) en une première sous-structure qui contient des données critiques et une deuxième sous-structure qui ne contient pas les données critiques, les données critiques étant des données pour lesquelles des lois d'un pays dans la juridiction duquel se situe le client (102) imposent des restrictions sur la collecte, le stockage, l'accès, la diffusion et le traitement ;
dans lequel le client est configuré pour sélectionner des itinéraires de réseau différents entre le client et le serveur pour les première et deuxième sous-structures sur la base d'une présence des données critiques dans la première sous-structure ;
dans lequel le client (102) est configuré pour envoyer la première sous-structure du client (102) au serveur (104) via un premier itinéraire qui comprend le premier noeud de réseau avec le module d'anonymisation (108), les données de la première sous-structure étant transformées par le module d'anonymisation (108),
dans lequel le client (102) est configuré pour envoyer la deuxième sous-structure du client (102) au serveur via un second itinéraire qui comprend le second noeud de réseau avec le module de stockage (1004) ; et
dans lequel le client est configuré pour sélectionner le premier itinéraire ou le second itinéraire sur la base d'une présence des données critiques dans une sous-structure correspondante ;
dans lequel le serveur est configuré pour combiner des sous-structures de données reçues via le premier itinéraire et le second itinéraire en une seconde structure de données ;
dans lequel le système est **caractérisé en ce que** le serveur (104) est configuré en outre pour envoyer au client une réponse à la structure de données de requête, la structure de données de réponse qui répond à la requête contenant une troisième sous-structure contenant des données critiques telles que transformées par le module d'anonymisation (108) ; et
une quatrième sous-structure ne contenant pas de données critiques basées sur le traitement de la deuxième sous-structure ;
dans lequel la quatrième sous-structure ne contenant pas de données critiques est envoyée du serveur (104) au noeud de réseau avec le module de stockage (1004) ;
dans lequel la troisième sous-structure contenant des données critiques est envoyée du serveur (104) au noeud de réseau avec le module d'anonymisation (108) ;
dans lequel une transformation inverse de la troisième sous-structure de la structure de données de réponse qui répond à la requête contenant des données critiques est réalisée par le module d'anonymisation (108), et un message concernant la manipulation de la requête est envoyé dans la sous-structure au client (102) auquel appartiennent les données critiques ; et
dans lequel la quatrième sous-structure ne contenant pas de données critiques est obtenue par le client (102) en provenance du second noeud de réseau avec le module de stockage (1004).
